# EUROPEAN PATENT APPLICATION

(11) **EP 2 595 362 A1**
(43) Date of publication of application: **22.05.2013**
(21) Application number: 12193123.2
(22) Date of filing: 19.11.2012
(51) Int. Cl.: H04L 29/08, H04L 12/40, H04L 12/70, H04L 12/931, G06F 9/50, B64D 11/00

(54) **Aircraft computer system for executing inflight entertainment and electronic flight bag applications**

(30) Priority: 17.11.2011 WO PCT/IB2011/055147
(71) Applicant: Flight Focus Pte. Ltd., Singapore 486073 (SG)
(72) Inventor: Cabos, Ralf, 486073 Singapore (SG)
(74) Representative: Schweiger, Martin

(57) **Abstract**

The application discloses an aircraft computer system which comprises an electronic flight bag computer and at least two server computers which are linked via a databus in a network configuration. The electronic flight bag computer and the at least two server computers are linked via respective control lines. At least one of the server computers is configured to change between an electronic flight bag mode and an in-flight entertainment mode in response to receiving a pre-determined signal via the control line. At least one of the server computers comprises at least two network switches and is configured to activate one of the at least two network switches and to deactivate the other one of the at least two network switches in response to the pre-determined signal via the control line.

## Description

At present, an in-flight entertainment (IFE) is offered as an option on almost all wide body aircraft, while some narrow body aircraft are not equipped with any form of in-flight entertainment at all. This is mainly due to the aircraft storage and weight limits. The in-flight entertainment system is typically isolated from the main systems of the aircraft. It is often controlled via line replaceable units (LRUs) which are placed in computer racks of the aircraft.

In some passenger aircraft, there are further LRUs which may take over various tasks. For example, there may be LRUs which provide computing power for a class 3 electronic flight bag (EFB). An electronic flight bag is an electronic information management device that helps flight crews perform flight management tasks more easily and efficiently with less paper. It is a general purpose computing platform intended to reduce, or replace, paper-based reference material often found in the Pilot's carry-on Flight Bag, including the Aircraft Operating Manual, Flight Crew Operating Manual, and Navigational Charts (including moving map for air and ground operations). In addition, the EFB can host purpose-built software applications to automate other functions normally conducted by hand, such as performance take-off calculations.

The application discloses an aircraft computer system which comprises an electronic flight bag computer and at least two server computers which are linked via a databus in a network configuration. In particular, the server computers can be linked to one another in a daisy chain configuration in order to reduce cables. According to the application, the server computers are equipped to forward data packets. They may also be equipped for further signal handling tasks such as signal amplification and noise reduction.

The electronic flight bag computer is connected to pilot terminal units in a cockpit of the aircraft which provide displays and input/output means to provide a two way communication between electronic flight bag applications on the electronic flight bag computer and the pilots.

The electronic flight bag computer and the at least two server computers are linked via respective control lines and at least one of the server computers is configured to change between an electronic flight bag mode and an in-flight entertainment mode in response to receiving a pre-determined signal via the control line. In this way, the electronic flight bag computer is able to flexibly distribute computing power between the electronic flight bag and the in-flight entertainment by setting a pre-determined number of server computers into an electronic flight bag mode while the other server computers are used for in-flight entertainment.

The provision of dedicated command lines to the server computers according to the application ensures that command signals are not affected by data signals and also ensures that fake command signals cannot be generated by hacking into the server computers.

At least one of the server computers comprises at least two network switches. At least one server computer is configured to activate one of the at least two network switches and to deactivate the other one of the at least two network switches in response to the pre-determined signal via the control line.

According to the application, the two network switches provide two independent communication channels which are intended for communication between the server computer and the electronic flight bag computer and the server computer and other server computers in an in-flight entertainment mode. The activation and deactivation of the switches provides an added security and prevent data signals which are not needed in the current mode of the server computer from reaching the server computer.

An activation/deactivation of a network switch refers to either a change of a state of the network switch itself or a change of state of an electronic component that is connected to the switch, such as a microprocessor. The deactivation of the switch according to the application may comprise a reduction of the functionality of the switch such as blocking certain ports or only allowing data traffic in certain directions or even disabling the switch. A deactivation may also comprise disabling a link between a processor and the network switch such that messages over the deactivated network switch are not processed by the server computer but are still forwarded to other server computers via the deactivated switch.

The network switch for the communication with the EFB computer and server computers in EFB mode may be realized as a switch with only a few ports, such as a 4-port switch while the network switch for the communication with server computers in IFE mode may be realized as an Ethernet switch with many ports.

To provide two independent communication channels, the server computer may be linked to each other using the switches in the below mentioned way.

A first server computer and a second server computer of the server computers of the network configuration each comprise a first network switch and a second network switch. The first network switch of the first server computer is linked to the first network switch of the second server computer and the second network switch of the first computer is linked to the second network switch of the second server computer.

In an electronic flight bag mode, the first network switch of the first server computer is configured to communicate with the first network switch of the second computer, and wherein, in an in-flight entertainment mode, the second network switch of the first server computer is configured to communicate with the second network switch of the second computer. In this way, the two communication channels can be made independent.

In particular, the respective other network switch may be configured to be deactivated while one of two network switches of a network computer is activated.

There may be separate control lines between the EFB computer and the server computer or the control commands may be forwarded between the server computers via control lines between the server computers.

The first network switch of a server computer can be made part of a network and control unit which takes over various functions for the first network switch such as activation/deactivation and separating internal and external data traffic.

According to one embodiment, a first control line and a second control line are connected to the network and control unit. The network and control unit is configured to receive pre-determined control commands from the electronic flight bag computer via the first control line and is configured to send pre-determined control commands to a further server computer of the network configuration via the second control line. Another server computer to which the first server computer is connected is configured to change between an electronic flight bag mode and an inflight entertainment mode in response to a pre-determined command via the second control line that links the two server computers.

The abovementioned network and control unit may furthermore be connected to a media server processor on the server computer via a data bus. The media server processor may then be configured to change between at least an electronic flight bag mode and an in-flight entertainment mode in response to a pre-determined command signal from the network and control unit. The configuration of the media server processor may be achieved by stored commands or by hard wired circuits, for example. Thereby, the processor takes over control of the switch and a simple network switch without capability to switch between different modes can be used.

Furthermore, the network and control unit may be connected to a second network switch, directly or via further components such as a processor and wherein the second network switch or and/or the other component is configured to change between an electronic flight bag mode and an in-flight entertainment mode in response to a command signal from the network and control unit. Thereby, the second network switch can also be controlled from the network and control unit and the control functions are essentially provided by the network and control unit which can be produced and/or configured as a customized exchangeable part.

In particular, the second network switch may be provided as an Ethernet switch which is a widely available and economic component. The first network switch can be provided as a robust and reliable switch with just a few ports, such as a four port switch.

The application provides further more a method to configure an aircraft computer system. A pre-determined control command with an electronic flight bag computer. The pre-determined control command is sent to a server computer of a network configuration of server computers.

In response to the pre-determined control command, the server computer triggers a change between an electronic flight bag mode and an in-flight entertainment mode of the server computer. The change of mode comprises activating a first set of network connection lines of the server computer and deactivating a second set of network connection lines of the server computer. The activating/deactivating of the network connection lines is achieved by a state change of an electronic component which controls the network connection lines and the network connection lines may be realized as internal data bus, for example by conducting connections on a printed circuit board. The data bus conforms to a standard for serial or parallel data transmission such as ATA, S-ATA, SCSI or others.

Further steps may comprise: activation or deactivation of network switches, of other electronic components which are connected to the network switches, rebooting and loading of an executable image etc.

The application discloses furthermore an aircraft computer system with an electronic flight bag computer and at least two server computers which are linked in a network configuration, for example in a daisy chain configuration. The electronic flight bag computer and the at least two server computers are linked via control lines and at least one of the server computers is configured to change between an electronic flight bag mode and an in-flight entertainment mode in response to a pre-determined signal via the control line.

Att least one of the server computers of the network configuration is configured to reboot in response to a pre-determined command from the electronic flight bag computer via a control line. The rebooting ensures that processes which are running in the current mode are terminated before the computer is set in the new mode and do not affect the processes that are running in the new mode.

Furthermore at least one of the server computers of the network configuration may be configured to load an executable image in response to a pre-determined command from the electronic flight bag computer via a control line. In particular the executable image can be stored in a central location, such as an external memory, and all server computers may load the executable image from the central location.

In particular the executable image may comprise an operating system which is adapted to the requirements of the mode. For example, security and processing speed can be enhanced by using an operating system with a reduced functionality.

According to a more specific embodiment the server computer is configured to load an executable image with at least one electronic flight bag application in response to a command to change to an electronic flight bag mode and wherein the server computer is configured to load an executable image with at least one in-flight entertainment application in response to a command to change to an in-flight entertainment mode. By using the loaded applications that are specific to the mode, calculations can be made independently and thereby network traffic can be reduced.

The application furthermore discloses a method to configure an aircraft computer system. A pre-determined control command is generated with an electronic flight bag computer. The pre-determined control command is sent from the electronic flight bag computer to a server computer of a network configuration of server computers via a control line.

The server computer changes between an electronic flight bag mode and an in-flight entertainment mode of the server computer in response to the pre-determined control command. The changing between the modes comprises rebooting of the server computer and loading an executable image from an external computer readable memory such as an external hard disk, a flash memory etc., into a computer readable memory of the server computer. Especially, the executable image may comprise an operating system.

A rebooting according to the application comprises the shutting down a first operating system, execution of a bootstrap sequence from a ROM, for example a BIOS command sequence, loading of a second operating system and launching of the second operating system.

The application discloses furthermore a server computer of an aircraft, which is configured to change between at least an electronic flight bag mode and an in-flight entertainment mode. The server computer comprises a network and control unit with an IP-router, a first network switch and a second network switch.

The IP-router is configured to detect internal and external data packets based on identification data of the data packets and wherein the IP-router is configured to route the internal data packets via the first network switch and to route the external data packets via the second network switch.

Thereby, data traffic can be routed to server computers which are in a mode that corresponds to the data packets, for example internal data packets are routed to computers in EFB mode and external data packets are routed to computers in IFE mode.

In a more specific embodiment, the first network switch is connected to a network switch of an electronic flight bag computer that is connected to one ore more pilot terminal units. The electronic flight bag computer is furthermore connected to a transceiver to a satellite link with essentially global coverage such as Iridium. Thereby, the data messages of the worldwide satellite link, which are primarily intended for the electronic flight bag computer or server computers in electronic flight bag mode, reach the EFB computer directly.

The server computer, on the other hand, is connected to a transceiver of a broadband satellite link which is primarily intended for data traffic for in-flight entertainment and also other passenger service. This broadband satellite link may have a limited coverage, such as Inmarsat.

In a further embodiment, the first network switch is connected to a first network switch of a second server computer of a network configuration and the second network switch is connected to a second network switch of a second server computer of a network configuration. The IP-router is configured to forward the internal data packets via the first network switch and to forward the external data packets via the second network switch. Thereby, separate channels are provided for the internal and external data and security and reliability is enhanced.

The application furthermore discloses a method for transmitting data in an aircraft computer system. A data signal is received via an aircraft, the data signal is transmitted to a server computer and data packets are derived from the data signal.

The IP router uses the identifiers in the data packets or in at least some of the data packets are used to classify the data packets into internal and external data packets. The IP-router forwards the internal data packets to an electronic flight bag computer or to a server computer in an electronic flight bag mode via a first network switch, for example a 4-port switch, of the server computer.

The IP-router forwards the external data packets to inflight entertainment servers, which are server computers in an in-flight entertainment mode, via a second network switch of the server computer, for example an Ethernet switch.

The application furthermore disclose a wireless network in an aircraft. A first WLAN communication equipment is provided, in particular a WLAN communication equipment according to a WIFI protocol. A second communication equipment is provided which is a short range WLAN communication equipment, especially according to a Bluetooth standard.

A server computer is configured to send and receive data over the short range WLAN communication equipment according to at least two pre-determined proprietary protocols which are based on a serial Bluetooth protocol. The server computer which is connected to the short range WLAN communication equipment is configured to change between the at least two proprietary protocols in a pre-determined way. The use of an emulated serial protocol makes it easy to implement a proprietary protocol on top of it, for example by shuffling data bits with start and stop bits of the serial protocol. Providing a Bluetooth WLAN, on the other hand allows the use of easily available Bluetooth devices while unintended interference with other Bluetooth devices such as the passengers' mobile phones and laptops is avoided through use of the proprietary protocol.

By providing one or more proprietary protocols according to the application, a short range WLAN can be provided for the cabin crew. Accidental or even intentional use of this short range WLAN by the passengers is avoided.

More specifically, one or more of the data packets of the short range WLAN communication equipment may comprise a protocol indicator. A list of pre-determined protocols and associated protocol identifiers is stored on a computer readable memory of an aircraft computer, especially on a dedicated electronic flight bag computer.

The aircraft computer is configured to choose a pre-determined protocol based on the protocol identifier and to decode a data packet according to the chosen pre-determined protocol.

Alternatively or in addition, a protocol sequence indicator may be included into data packets of the short range WLAN communication equipment. A list of pre-determined protocols and associated protocol identifiers is stored on a computer readable memory of an aircraft computer, especially an electronic flight bag computer.

The aircraft computer is configured to choose a pre-determined sequence of pre-determined protocols based on the protocol sequence identifier and to decode one or more data packets according to the chosen pre-determined protocol sequence.

In particular, the aircraft computer, which is connected to the short range wireless network, may be connected to an aircraft antenna and a computer readable memory of the aircraft computer may comprise a means for forwarding data packets from the short range WLAN communication equipment to a ground station, for example via Bluetooth data link or a satellite link, via the aircraft antenna.

The aircraft computer, which is connected to the short range wireless network) may furthermore comprise a data assembler, the data assembler that is configured to assemble different types of data that is contained in the data packets of the short range WLAN into a data bundle. The use of the data bundle provides efficient use of bandwidth and may also provide a data security through the specific structure of the data bundle. In one embodiment, a data bundle is defined as data which is encrypted together. The data bundle may fit into one data packet or it may be distributed over several data packets.

Furthermore, the aircraft computer, which is connected to the short range wireless network, may be configured to include a sequence number in the data bundle. The data bundle can then be transferred by splitting data bundle in data packets and sending the data packets over a wireless connection to a ground station.

The application furthermore comprises a method for transmitting data over a wireless network of an aircraft. Data packets are generated from data to be transmitted, wherein the data packets conform to a pre-determined protocol. The pre-determined protocol is in particular based on a Bluetooth serial profile. At least one of the data packets comprises a pre-determined protocol identifier, wherein a protocol identifier may also refer to a protocol sequence identifier.

A data signal is generated from the data packets, and the data signal is sent from a mobile device within the aircraft. The data signal is received by a WLAN access cluster in the aircraft. The WLAN access cluster is connected to a server computer in the aircraft, which is typically a line replaceable unit on a computer rack in a computer compartment of the aircraft. Data packets are derived from the data signal and the pre-determined protocol identifier is used to automatically select a pre-determined protocol that is based on the Bluetooth serial protocol and to decode the data packets according to the pre-determined protocol.

Moreover, the generation of the data packets may also comprise attributing a pre-determined significance to Bits of the data packets according to a pre-determined scheme. The scheme may for example specify a first bit as second data bit, a second bit as first header bit, a third bit as fourth checksum bit, a fourth bit as first data bit and so on. The pre-determined scheme is correspond to the pre-determined protocol identifier that was transmitted in a data packet. The shuffling of Bit positions according to the application provides an efficient and fast way to achieve a proprietary data encoding.

Furthermore, the present application discloses packet router for forwarding data packets to a secure processing area in a computer system on an aircraft wherein the packet router comprises means for storing an aircraft related key, means for decrypting data packets with the aircraft related key and means for forwarding the data packets to a secure computing area of the aircraft if the data packets are detected as admissible, wherein the detection comprises a successful decryption attempt with the aircraft related key.

In particular, the aircraft related key may be derived from a tail number of the aircraft.

The packet router may further comprise a timer and a means for determining a list of packet numbers of data packets to be received in a time slot, depending on packet numbers of data packets received in a preceding time slot and means for triggering a re-transmission for data packets with numbers that are not in the determined list of packet numbers.

In particular, the packet router may be located within an electronic flight bag line replaceable unit. Alternatively, the packet router may be located within an IP router on a server computer of the aircraft, which is different from the electronic flight bag line replaceable unit. In this way, the routing of the data packets can be performed outside of a secure processing area.

Moreover, the application discloses an aircraft computer system with the aforementioned packet router. The aircraft computer system comprises the secure processing area. In particular, the secure processing area may comprise an electronic flight bag line replaceable unit and also connected equipment such as pilot display units and transmitters.

The abovementioned data routing, which is based on a decryption attempt, is simple and efficient. A PKI based encryption according to the application which is carried out on the data packet level rather than on a protocol level can be used with various data protocols.

The secure processing area may furthermore comprise server computers which are linked to the electronic flight bag line replaceable unit and which are in an electronic flight bag mode.
Figure 1 illustrates a flight information system,
Figure 2 illustrates a computer configuration of the flight information system with IFE computers,
Figure 3 illustrates a schematic diagram of the entertainment server of Fig. 2, and
Figure 4 illustrates a daisy chain configuration according to an embodiment of the application,
Figure 5 shows a daisy chain configuration according to an alternative embodiment,
Figure 6 shows a schematic diagram of a packet oriented data transfer system, and
Figure 7 shows a diagram of data packet handling method.

In the following description, details are provided to describe the embodiments of the application. It shall be apparent to one skilled in the art, however, that the embodiments may be practised without such details.

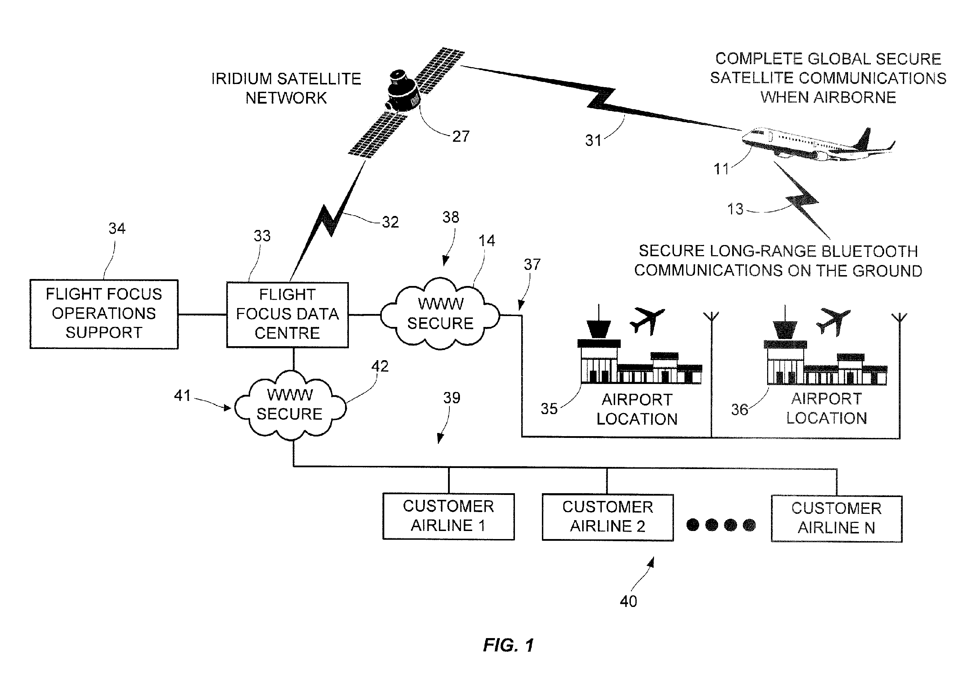

Figure 1 shows an operational diagram of a flight information system 10.

The flight information system 10 comprises airborne components of the flight information system 10 which are provided on the aircraft 11. The airborne components include, among others, one or more displays, a main computer, means for communication and data exchange and on board applications and data, which are stored on a computer readable medium.

A first portion 31 of a satellite communication channel 12 connects the airborne components of the flight information system 10 to a satellite 27. A second portion 32 of the satellite communication channel 12 is provided between a service provider's data centre 33 and the satellite 27. The connection between the service provider's data centre 33 and the satellite 27 may involve intermediate nodes, for example of an aeronautical telecommunication network, which are not shown in Fig. 1.

The service provider's data centre 33 is connected to an operations support centre 34. Airport communication channels 36 are provided between the service provider's data centre 33 and airports 35, 36. The airport communication channels 37 comprise a first secure connection 38 via a first data network 14. Airline communication channels 39 are provided between the service provider's data centre 33 and airline offices 40. The airline communication channels 39 comprise a second secure connection 41 via a second data network 42.

Furthermore, a Bluetooth communication channel 13 is provided between a transmitter at an airport 35, 36 and the aircraft 11. The Bluetooth communication channel 13 serves to connect the aircraft 11 to the service provider's data centre 33 via the airport communication channel 37 while the aircraft 11 is on ground.

Bluetooth refers to an open wireless technology standard for exchanging data over short distances using short wavelength radio transmissions in the ISM band from 2400-2480 MHz. Bluetooth provides a personal area network or piconet. A frequency-hopping spread spectrum radio technology is employed. The data being sent is chopped up and chunks of it are transmitted on up to 79 bands which have band widths of 1 MHz each and are centreed from 2402 to 2480 MHz. The range of the Bluetooth protocol ranges from 2,400-2,483.5 MHz. This range lies within the globally unlicensed Industrial, Scientific and Medical (ISM) 2.4 GHz short-range radio frequency band. With Bluetooth, different types of modulation maybe used for the transmission of digital data such as Gaussian frequency-shift keying (GFSK) modulation π/4-differential quadrature phase shift keying (π/4-DQPSK) and 8 state differential phase shift keying (8DPSK) modulation. Devices functioning with GFSK are said to be operating in basic rate (BR) mode where an instantaneous data rate of 1 Mbit/s is possible. The term Enhanced Data Rate (EDR) is used to describe n/4-DPSK and 8DPSK schemes, each giving 2 and 3 Mbit/s respectively.

Bluetooth is a packet-based protocol with a master-slave structure. One master may communicate with up to 7 slaves in a piconet; all devices share the master's clock. Packet exchange is based on the basic clock, defined by the master, which ticks at 312.5 µs intervals. Two clock ticks make up a slot of 625 µs; two slots make up a slot pair of 1250 µs. In the simple case of single-slot packets, the master transmits in even slots and receives in odd slots; the slave, conversely, receives in even slots and transmits in odd slots. Packets may be 1, 3 or 5 slots long but in all cases the master transmit will begin in even slots and the slave transmit in odd slots.

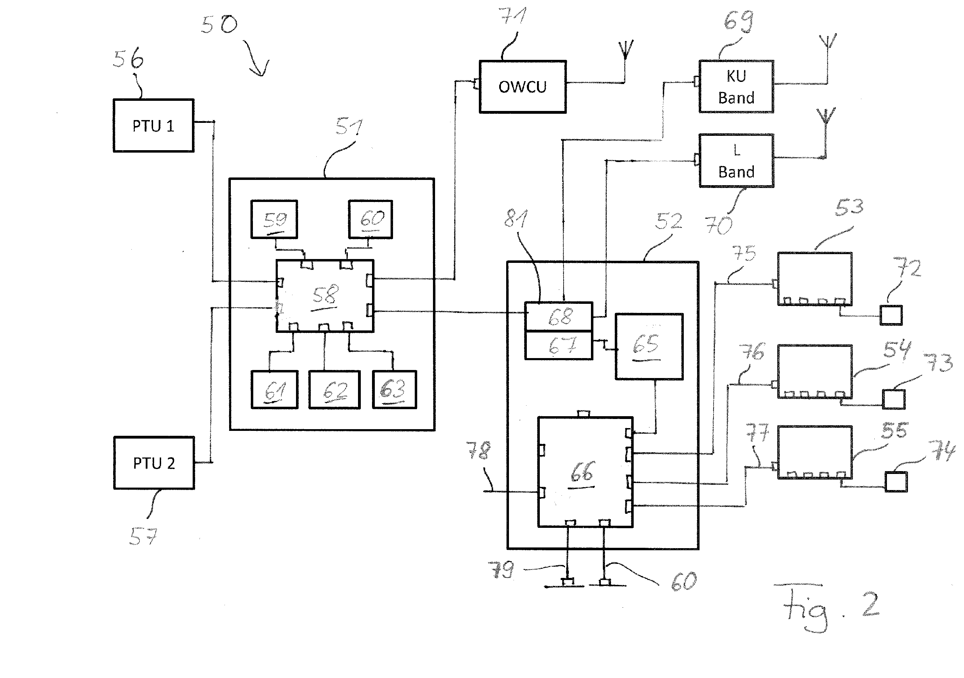

Figure 2 illustrates a computer configuration 50 of the flight information system 10 on the aircraft 11. The computer configuration 50 comprises an electronic flight bag line replaceable unit (EFB LRU) 51 for an electronic flight bag, at least one server computer 62, and several wireless access point clusters 53, 54, 55. The one or more server computers 52 are line replaceable units.

A first pilot terminal unit 56 and a second pilot terminal unit 57 are connected to respective ports of an Ethernet switch 58 of the EFB LRU 51. The pilot terminal units comprise a display and an input means for a pilot or a co-pilot and are installed in the cockpit of the aircraft. Among others, a memory of the electronic flight bag computer comprises a moving map application which is used during the flight to display a moving map on the display together with the actual position of the aircraft and other relevant information. Five multi-core microprocessors 59, 60, 61, 62, 63 of the EFB LRU 51 are connected to respective ports of the Ethernet switch 58.

An onboard wireless communication unit (OWCU) 71, which is connected to an OWCU antenna, is connected to the Ethernet switch 58 of the LRU 51. The OWCU 71 provides a connection to a broadband connection with worldwide coverage, for example the 128 Kbps open port service of Iridium. The broadband connection is mainly provided for the transmission of aircraft related data. According to the application, it can be used for passenger related services or for the cabin crew as well.

The server computer 52 comprises an IP-router 64 with firewall IP-, multi-core microprocessors 65 and an Ethernet switch 66. The multi-core microprocessors 65 are connected to the network and control unit 81 and to a port of the Ethernet switch 66. An external traffic section 68 of the IP-router 64 is connected to a KU band system 69 and to an L band system 70. The KU band system 69 and the L band system 70 are connected to respective antennas.

The wireless access point clusters 53, 54, 55 are connected to respective ports of the Ethernet switch. Local wireless access points 72, 73, 74 are connected to respective ports of the wireless access point clusters 53, 54, 55 via respective connection cables 75, 76, 77.

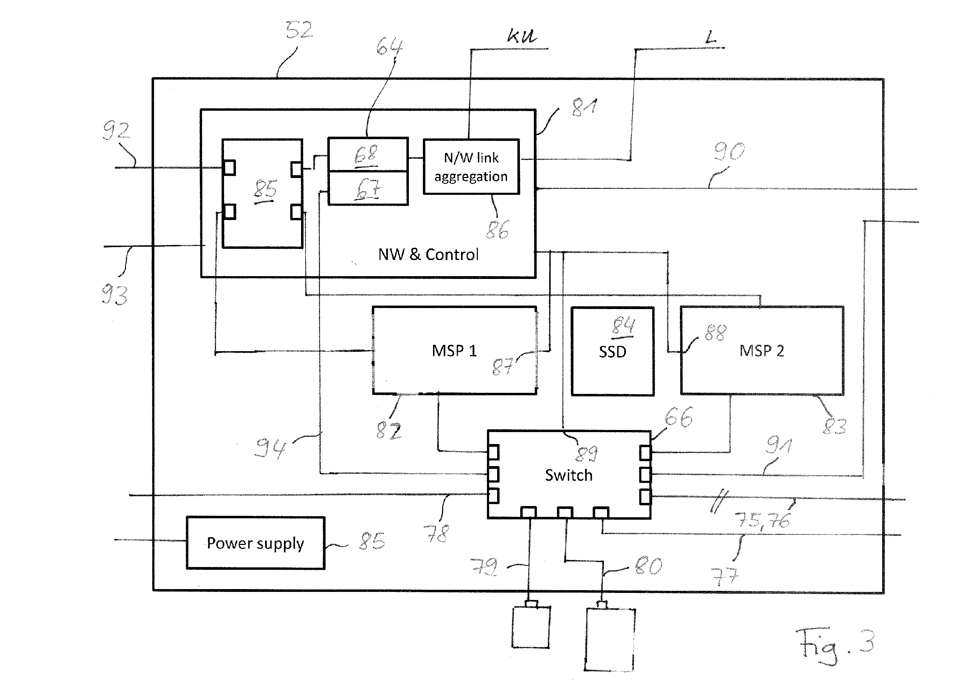

Furthermore, a spare network control panel is connected to a port of the Ethernet switch 66 via a cable 78 and storage media a connected to further ports of the Ethernet switch 66 via cables 79 and 80. For reasons of simplicity, the Figs. 2 and 3 do not show all ports of the Ethernet switch 66.

Figure 3 shows a schematic diagram of the entertainment server 52 of Fig. 2 in further detail. The entertainment server 52 comprises, among others, a network and control unit 81, a first media server processor 82, a second media server processor 83, a solid state drive 84, the Ethernet switch 66 and a power supply 85. The network and control unit 81 comprises a 4-port switch 85, the network traffic router 64, and a network link and aggregation unit 86.

A first input of the network traffic router 64 is connected to the KU band system 69 and a second input of the network traffic router 64 is connected to the L Band system 70. The external traffic section 68 of the IP-router 64 is connected to the 4-port switch 85 and the internal traffic section 67 of the IP-router 64 is connected to a port of the Ethernet switch 66 via an internal data line 94.

The abovementioned KU band refers to a frequency range from about 12 to about 18 GHz, which may be attributed to different services, for example as shown in the following table:

| **Band** | service type | downlink | Uplink |
|---|---|---|---|
| **Kᵤ (Europe)** | fixed satellite services | 10.7-11.7 GHz | 12.75-13.25 GHz, 13.75-14.5 GHz |
| | broadcasting satellite services | 11.7-12.5 GHz | 17.3-18.1 GHz |
| | satellite media services | 12.5-12.75 GHz | 12.75-13.25 GHz, 13.75-14.5 GHz |
| **Kᵤ (America)** | fixed satellite services | 11.7-12.2 GHz | 14-14.5 GHz |
| | | 12.2-12.7 GHz | 17.3-17.8 GHz |

A first port of the 4-port switch 85 is connected to the EFB LRU 51 via a data line 92, a second port of the 4-port switch 85 is connected to the IP-router 64, a third port of the 4-port switch 85 is connected to the first media server processor 82 and a fourth port of the 4-port switch 85 is connected to the second media server processor 83. A port of the network and control unit 81 is connected to the EFB LRU 51 via control line 93. The control lines 90 and 93 each comprise lines for serial transmission of data and dedicated discrete command lines.

Furthermore, the network and control unit 81 is connected to a control input 87 of the first media server processor 82, to an control input 88 of the second media server processor 83 and to a control input 89 of the Ethernet switch 66.

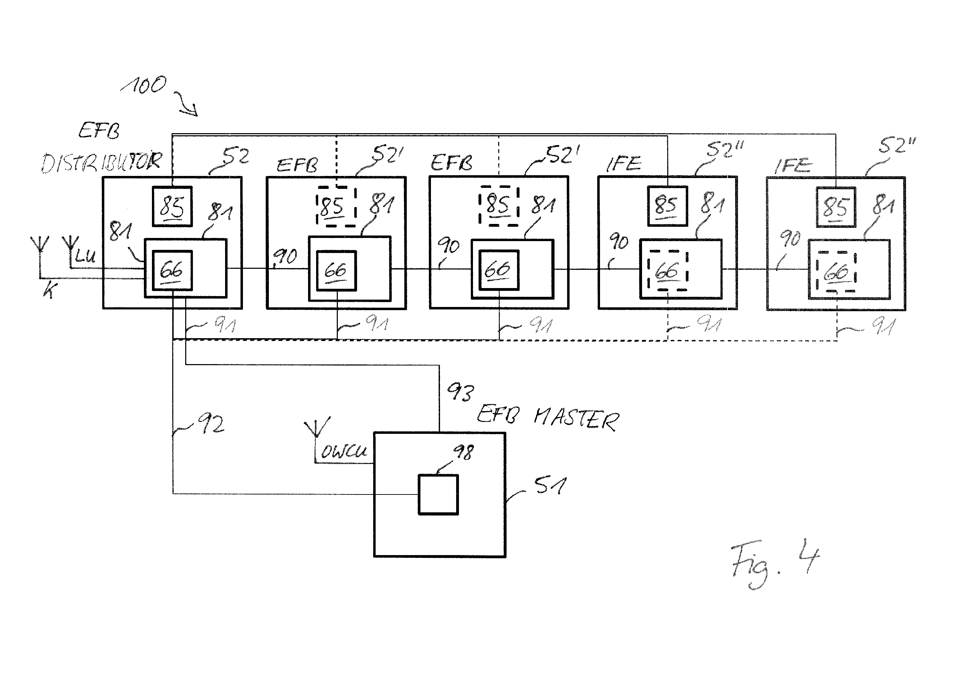

An output of the network and control unit 81 is connected to a further server computer 52 of a daisy chain configuration of computers via a control line 90. The daisy chain configuration can be seen in Fig. 4.

Furthermore, the first media server processor 82 is connected to a port of the Ethernet switch 66 and the second media server processor 83 is connected to a port of the Ethernet switch 66.

In the example of Fig. 3, a data line 91 connects a computer of the daisy chain configuration to a further port of the Ethernet switch 66. According to a specific embodiment, the EFB LRU 51 and the server computers 52 are configured such that the data traffic between them and to the IP-access clusters 53, 54, 55 is carried out using the TCP-IP protocol standard.

According to the application, the server computer 52 or other server computers that are connected to the server computer 52 can be set to an inflight entertainment mode and to an electronic flight bag (EFB) mode. A first server computer 52 of the daisy chain configuration which distributes messages to the other server computers 52 of the daisy chain configuration is also referred as "distributor" or "master representative".

In the following, the same part reference numbers are used for similar parts of the server computers of the daisy chain configuration.

During a configuration phase of the flight information system, it is determined how many computers of the daisy chain configuration are to be dedicated to an electronic flight bag which provides information services to a flight crew in the cockpit of the aircraft. Control commands are sent to the server computers 52 of the daisy chain configuration via the control line 93. The control commands specify whether a server computer 52 is to be used as inflight entertainment computer in an inflight entertainment mode or as an electronic flight bag computer in an electronic flight bag mode.

In response to a first command, the 4-port switch 85 activates a first set of internal data lines and deactivates a second set of internal data lines of a server computer 52. In response to a second command, the 4-port switch 85 deactivates the first set of internal data lines and activates the second set of internal data lines of a server computer 52. The activation/deactivation of the internal lines is performed in the way that is described below.

In the inflight entertainment mode of a server computer 52, the connection between the 4-port switch and the first media server processor 82 and the connection between the 4-port switch and the second media server processor 83 are inactive, while the connection between the first media server processor 82 and the Ethernet switch 66 and the connection between the second media server processor 83 and the Ethernet switch 66 are active. In the inflight entertainment mode, the Ethernet switch 66 is used as a dedicated switch for network traffic, for example to the wireless access point clusters.

In the electronic flight bag mode of a server computer 52, on the other hand, the connection between the 4-port switch and the first media server processor 82 and the connection between the 4-port switch and the second media server processor 83 are active, while the connection between the first media server processor 82 and the Ethernet switch 66 and the connection between the second media server processor 83 and the Ethernet switch 66 are inactive. In the electronic flight bag mode, the 4-port switch is used as a dedicated switch for network traffic, for example to other server computers 52, which are in electronic flight bag mode.

According to a first embodiment, the configuration in which the server computers 52 of the daisy chain are designated as inflight entertainment or electronic flight bag computers is carried out before the start of the aircraft, when the aircraft is on the ground.

According to a second embodiment, the server computers of 52 are reassigned during the various flight phases of the aircraft, such as taxiing, take-off, cruising, loitering and landing. To this end, one the electronic flight bag computer 51 is configured as a master computer 51. The master computer 51 holds a demand list of the expected computing power and storage space that the electronic flight bag requires during the various flight phases. From the demand list, the master computer generates an assignment list that determines which of the server computers 52 of the daisy chain are to be set into which mode during a specific flight phase. The demand list may be updated regularly using statistics from past flights.

According to the application, a server computer 52 that is running in a current mode is reassigned to a new mode by shutting down the server computer 52, restarting the server computer 52 and assigning it to the new mode. The assignment to a mode furthermore comprises the loading of an executable image into a computer readable memory of the server computer 52. The executable image comprises an operating system that corresponds to the chosen mode.

In the electronic flight bag mode, a memory of the server computer 52 comprises computer executable code to run applications such as loading and take off computations, performance software, weight and balance sheet software and other EFB applications, as well as data for hosting charts and manuals and other static data that is required by the EFB applications. In the inflight entertainment mode, on the other hand, the memory of the server computer 52 comprises computer executable code for running internet applications, video streaming applications, online shopping applications and so forth.

In addition, the assignment of the individual server computers 52 to the inflight entertainment mode and the electronic flight modes may also be configured manually by inputs of a flight crew member.

The IP-router 64 is configured to split the network traffic into internal traffic, which is forwarded to the internal traffic section 67 of the IP-router 64 and into external traffic which is forwarded to the external traffic section 68 of the IP-router 64. According to an exemplary embodiment, the internal data is characterized by a specific data marker which enables the IP-router 64 to identify internal data packets. The data marker may comprise a data packet number, a destination address, such as a MAC address, a timestamp, a one way key or other identification data. In addition, the identification data may be encrypted or be provided with an encrypted checksum. Moreover, the payload of the data packets may also be encrypted.

By making use of the IP-router 64, the network connection over the OWCU, which is linked to a satellite system with global coverage can be used for passenger broadband services such as inflight entertainment in addition to the use of the OWCU network connection for the electronic flight bag. Especially in this context, the functionality of the IP-router 64 to split the network traffic into internal and external data traffic is advantageous.

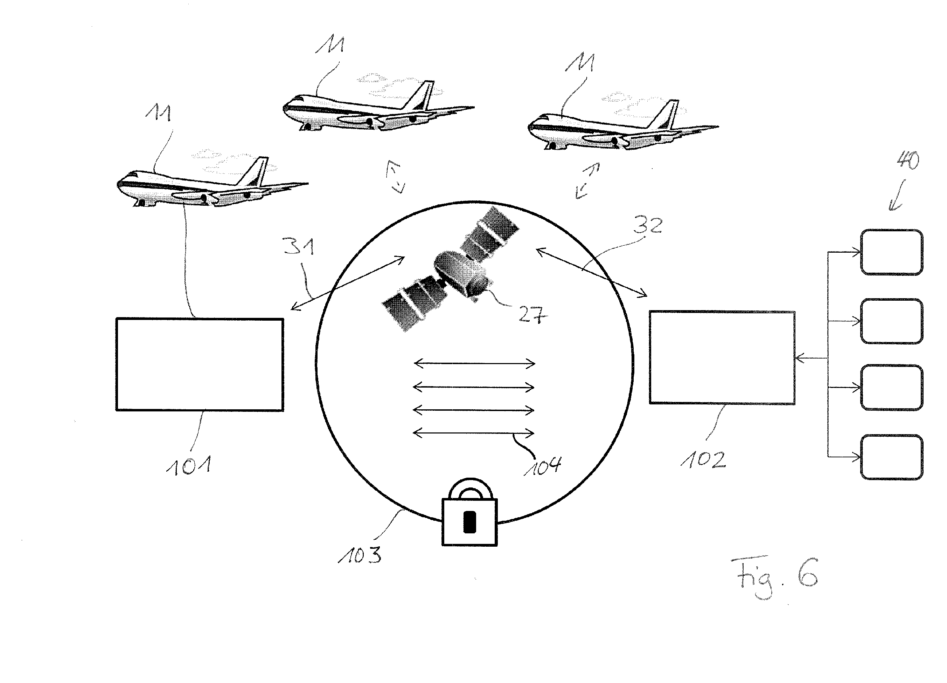

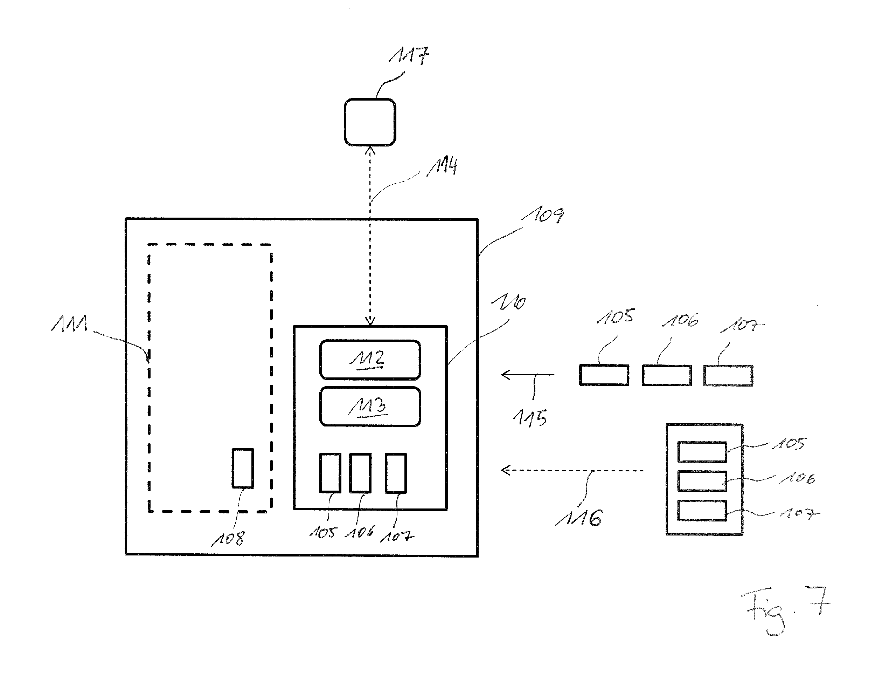

In one embodiment, the IP-router is configured to split the network traffic on a per packet basis based on a decryption attempt with a key that is stored on the aircraft. This is explained in more detail with respect to Figs. 6 and 7.

The wireless access points 72, 73, 74 provide a WiFi or other short range wireless connection passenger related services and in-flight entertainment as well as an access for the cabin crew to control the in-flight entertainment. In the context of this application "WiFi" refers to a WLAN which conforms to the IEEE 802.11 family of standards. Furthermore, the wireless access points 72, 73, 74 provide a Bluetooth connection to provide services for the cabin crew. According to the application, the Bluetooth data traffic of the cabin crew is carried out via a reconfigurable serial mode and a proprietary protocol. The services for the cabin crew may include communication with the flight crew and connections to the ground, for example for ordering services at a destination airport, sending messages to the ground, particularly to an airlines server, credit card approval and further services.

According to the application, the EFB LRU 51 is configured to use a pre-determined proprietary protocol via a Bluetooth connection, especially via a Bluetooth connection using the serial port profile. The serial port profile is based on the ETSI 07, 10 and the RFCOMM protocols. In particular, the RFCOMM protocol emulates a connection via a 9-pin serial RS 232 cable. The RFCOMM protocol is in turn based on the L2CAP (Logical Link Control and Adaptation layer Protocol) which is used for the transmission of RFCOMM packets.

The data packets are sent to and received from a host controller interface, via a logical channel. Each end of a L2CAP channel is identified by a 16-bit channel identifier. A L2CAP packet, or PDU (Packet Data Unit), is transmitted in one or more baseband packets on the asynchronous connectionless link (ACL), with the L_CH (Logical Channel) bits of the payload header set to 102 for the initial packet, and 012 for the subsequent packets. According to the RFCOMM standard, up to 60 emulated ports can be specified by using a 6-Bit data link connection identifier (DLCI).

The Bluetooth connection is preferentially used when the aircraft is on the ground at an airport in order to transfer data which relate to a flight mission of the aircraft.

According to a particularly simple embodiment, the pre-determined protocol may specify a pre-determined significance to each of the data bits in a sequence of data bits and stop bits in a typical configuration of data bits and stop bits such as a 7/2, 7/1 or 8/2 configuration. The pre-determined protocol may furthermore use a packet configuration other than those defined in the packet type tables 0 and 1 of the ACL packet standard.

Furthermore, the assignment of data bits may be different from the bit assignments for ACL data packets listed in the table below to provide a protection against eavesdropping and smuggling in of data packets.

| | |
|---|---|
| Single slot packets, basic data rate | Multi-slot packets, enhanced data rate |
| Header (1 byte), least significant bit first: | Header (2 bytes), least significant bit first: |
| L_CH (2 bits): Logical Channel. | L_CH (2 bits): Logical Channel. |
| 01 = continuation of an L2CAP PDU | 01 = continuation of an L2CAP PDU |
| 10 = start of an L2CAP PDU | 10 = start of an L2CAP PDU |
| 11 = LMP PDU | 11 = LMP PDU |
| FLOW (1 bit): flow control on the ACL link; 0=stop, 1=go. LENGTH (5 bits): number of bytes of data. | FLOW (1 bit): flow control on the ACL link; 0=stop, 1=go. LENGTH (10 bits): number of bytes of data. |
| Data *(LENGTH* bytes). | Padding (3 bits): undefined value. |
| CRC (16 bits): Cyclic Redundancy Check. | Data *(LENGTH* bytes). |
| | CRC (16 bits): Cyclic Redundancy Check |

In a particularly simple embodiment, the position of the payload bits and the cyclic redundancy bits may be exchanged, for example. The positions of the data bits and other bits such as header bits, type bits and redundancy bits may also be shuffled according to a pre-determined scheme. The pre-determined scheme may be given, for example by protocol identifiers, a pre-determined sequence of protocols or an identifier for a pre-determined sequence of protocols.

To increase the security, there may be more than one pre-determined protocol and those pre-determined protocols may be changed. Especially, the assignment of the data bits of a packet to payload and control bits may be changed. For example, the sender may send an identification number identifying the pre-determined protocol to be used.

A receiver computer, for example a computer on the aircraft, then identifies the protocol according to a list of pre-determined protocols with associated identification numbers, that is stored in a computer readable memory that is connected to the receiver computer. The receiver computer then uses the pre-determined protocol to interpret received data and to encode data to be sent.

The use of a proprietary protocol according to the application provides an additional layer of security and avoids the need of a complex encryption method which would increase the amount of data to be transmitted. The proprietary protocol may be used together with an encryption of data packets, however. For example, a public key encryption may be used. In order to reduce the amount of transmitted data, the public key encryption may be used to encrypt a symmetric key which is then sent to the aircraft for encrypting the data.

According to the application, the EFB LRU 51 comprises a gatekeeper. The gatekeeper comprises a data splitter which analyses the data packets according to pre-determined identification features and detects data of various data types. The data splitter splits the data of received data packages into typed data packages of the detected data types. The typed data packages are forwarded to a data assembler of the gatekeeper which reassembles the typed data packets into data files according to package numbers that are included in the typed data packets. If a package number is missing, a resending command is sent to a ground station. In addition, the data splitter and assembler combine outgoing data into data packets to be sent over an antenna of the aircraft 11.

A corresponding gatekeeper is provided at the ground, for example at the service provider's datacentre. The gatekeeper may also provide further functions such as encryption and decryption, identification of the sender, discarding of "foreign" data packets, checking of data validity via CRC checksum or other data and so forth.

Different types of data such as text may be combined into data containers with data container numbers. If a container number in a sequence of data containers is missing, a resending of the missing data container is triggered after a pre-determined time period after the missing data container number has been detected.

The gatekeepers at the aircraft and at the ground are realized via executable applications or hardware and are provided in particular to handle Bluetooth data traffic. According to the application, the gatekeepers are configured to handle a proprietary protocol which is provided on top of a Bluetooth protocol, and in particular on top of a serial Bluetooth protocol.

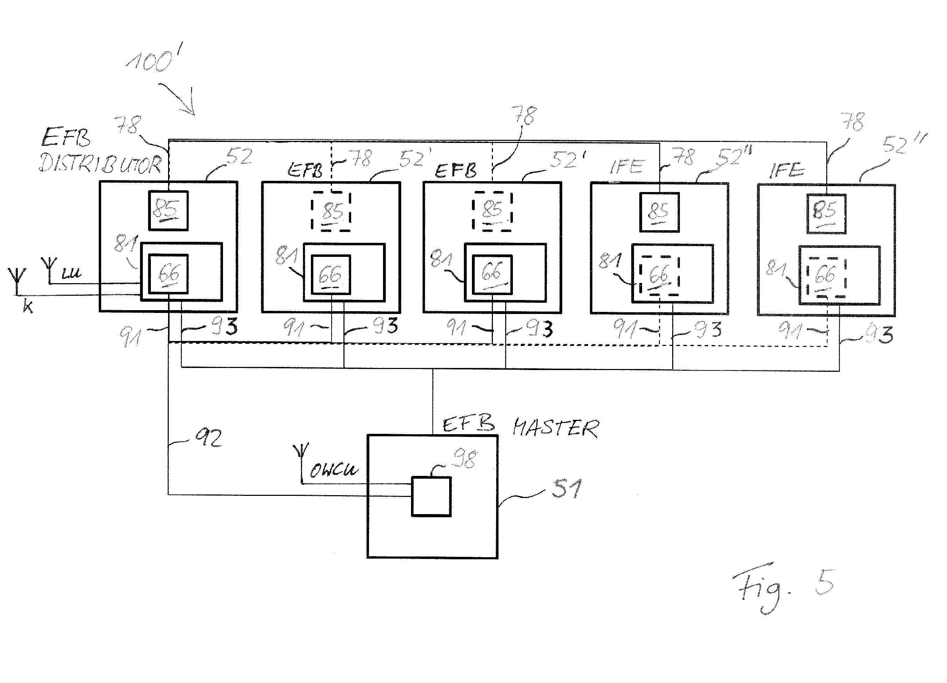

Figs. 4 and 5 show a daisy chain configurations 100, 100' according to the application. In the exemplary embodiments of Fig. 4 and 5, the daisy chain configurations 100, 100' comprise seven server computers which are referenced as 52, 52' and 52" .

Server computers 52 which are in an EFB mode are indicated by primes as 52'. Server computers which are in an IFE mode are indicated by double primes as 52". Furthermore, the daisy chain configuration comprises a distributor computer which is referenced by a 52 without prime. An active switch is indicated by a continuous line and an inactive switch is indicated by a broken line. In the distributor server computer 52, both the 4-port switch 85 and the Ethernet switch 66 are active. The distributor server computer 52 is connected to the EFB LRU 51.

According to one embodiment, messages that are received via the inactive switches are not processed or transmitted to another switch of the same computer but the inactive switch still forwards the message other computers of the daisy chain configuration. This embodiment is advantageous if the signal needs to be reamplified or when the computer is to send status messages via the inactive switch. According to another embodiment, the inactive switch is connected to a T-branch of a network cable and does not forward messages in the inactive mode. The other computers of the daisy chain continue to receive the messages through the network cable to which the inactive switch is connected.

The control line 93 connects the EFB LRU 51 to the server computers 52 and further control lines 90 connect the server computers 52 to each other.

During a startup or a reconfiguration of the server computers 52, the EFB LRU 51 sends control signals to the server computers 52 via the control line 93 which set the server computers 52 into the EFB or IFE mode. The server computer 52 which is connected to the KU band and the L-band systems is configured as a distributor server computer 52 which handles the message traffic from the KU-band and the L-band broadband channels. Furthermore, the distributor server computer 52 also handles message traffic from the OWCU that is sent to the distributor server computer 52 from the Ethernet switch of the EFB LRU 51.

Fig. 5 shows an alternative embodiment which provides an increased safety. According to Fig. 5 each of the server computers 52 of a daisy chain configuration is connected to the EFB LRU 51 by a separate control line 93.

The daisy chain configuration may be provided in a linear configuration, as shown in Figs. 4 and 5 but also in a loop configuration in which the last server computer 12 of a chain of interlinked server computers 12 is linked back to the first one.

In an alternative embodiment that provides a higher redundancy, several or all of the server computers 52 are connected to the LU band system and the K band system. During reconfiguration, the LRU sends a command via the control line 93 of Fig. 4 or via the separate control lines 93 of Fig. 5 that determines which of the server computers 52 takes over the role of a distributor server computer.

Instead of a 4-port switch, a switch with more or less ports may be provided as well and the switches may conform to a standard for local area networks other than Ethernet.

Fig. 6 shows a schematic diagram of a packet oriented data transfer system according to the application.

The data transfer system comprises an aircraft data acquisition application 101 on board of an aircraft 11 and a data synchronization application 102 on board of a service centre such as the Flight Focus data centre 33. The data synchronization application is linked to various airline offices 40 via network connections. The personnel and equipment of the service centre 33 which is handling the data synchronization is also referred to as the synchronization centre.

The aircraft 11 communicates with the service centre 33 via a secure connection 103 that is indicated in Fig. 5 with a lock symbol. While the aircraft 11 is in the air, it communicates with the service centre 33 via a satellite link.

Double headed arrows 104 indicate alternative communication links that can be used when the aircraft is on the ground. These communication links include portable devices with computer readable memory such as notepads and memory sticks as well as wireless communication links such as WLAN, WPAN, Bluetooth, WiMax and WIFI.

Fig. 7 shows a diagram of data packet handling method according to the application.

Data packets 105, 106, 107 are transmitted to an aircraft hosting area 109 in a computer system of the aircraft 11. The aircraft hosting area comprises a quarantine area 110 and a secure processing area 111. The quarantine area is controlled via a communication handler application 112 and a signature checking application 113. The communication handler application 112 controls a protocol link 114 to a synchronization control process 117 in the service centre 33. The synchronization control process 117 comprises instructions for distributing data from and various aircraft 11 and from and to the airline offices 40.

The synchronization control process 117 keeps track of the data in that it provides a least cost routing that choses the cheapest connection available for a data transfer, it controls adherence to pre-defined service level agreements, it sets a document delivery time to ensure that the documents are delivered when they are required by the aircraft. The choice of the cheapest communication path is also referred to as "least cost routing" and it may comprise deferring transmission of low priority data packets until the aircraft is grounded and sending them when the aircraft is on the ground. According to the application, documents can be treated as data objects. This may comprise various attributes and/or handling procedures that can be attributed to the documents such as update time, urgency, compression schemes and so on.

The protocol link 114 provides a connection between the aircraft 11 and a ground station via an inexpensive satellite link such as a short burst data service. Preferentially, the connection via the protocol link 114 is essentially permanently available. Likewise, the service centre 33 preferentially provides an update service that is available every day and at any time. Such a 24/7 service is advantageous for providing a continuous flight following reporting. Depending on the regulations, a flight following may be mandatory, but it can also be provided as a dedicated service and with additional data, wherein the data content is determined by the requirements of an airline.

Referring now back to Figs. 2 and 3, the secure processing area 111 according to the application may comprise the EFB LRU 51, the pilot terminal unit 56, the pilot terminal unit 57 and the on board wireless communication unit 71. The quarantine handler, on the other hand, may be located within the IP router 64.

Data packets 105, 106, 107, also known as "data containers" may be transmitted via a streaming connection 115, for example a global satellite network or a wireless connection, or via a manual transmission channel 116 via a device including a storage medium, for example a USB stick. In Fig. 7, only the transmission from ground to aircraft 11 is shown. An application in the service centre or in the aircraft decides whether documents are to be transmitted via storage medium. If the documents are transmitted manually via a storage medium, the data packets are queued first for pick up via the device that comprises the storage medium.

The data containers have a fixed size, wherein the size of the data containers is based on the communication bandwidth available on a weakest available communication path. The data containers may contain documents, file fragments or multiple messages, for example. The data packets are numbered. According to the application, the data packet number need not be encrypted. By contrast, the payload of the data packets is encrypted. The encryption of the payload is either done packet-wise, whereby the encryption is done per data container, or consecutively, wherein encrypted content is spread over several data containers. The data packets may also comprise service message which may comprise a request for the computer system on the aircraft to change to a different state. For example, the service message may request the master computer to change the number of computers in flight bag mode. In addition, "heart beat" packets may be sent in regular intervals to enable a check on whether the connection and/or the applications are still working.

According to the application, a data packet or a bit sequence that is distributed over more than one data packet may be encrypted with a public key of a plane. On delivery of an aircraft based computer, such as the EFB LRU, a private key is generated and stored on a secured memory area of a dedicated server computer on the aircraft. The private key may be generated with a random number generator using a tail number or serial number of the aircraft and/or a serial number of the dedicated server computer.

The synchronization centre on the ground administers PKI certificates and provides key revocation services. For security reasons, the synchronization centre may be provided at a single dedicated location.

According to the application, encryption takes place at the data packet level. A special encryption protocol such as SSL is not needed, though it could be used, and the data packets may be also be sent via an unprotected connection such as internet, store-and-forward devices, satellite connections and so on.

After data packets 105, 106, 107 have been received into the aircraft hosting area 109, they are stored in a quarantine area 113. The signature checking application 113 tries to decrypt the data packets with the aircraft's private key. If the decryption is successful, the data packets are forwarded into secure processing area 111. In Fig. 7, a forwarded data package 108 is shown. According to the application, the signature checking application 113 provides a simple and efficient packet router or packet routing mechanism which forwards data packets to the secure processing area 111 based on the result of a decryption attempt.

Additionally, the signature checking application 113 may also check the data packets for data integrity via inspection of a checksum and for the sender via inspection of a digital signature. In this case, forwarding to the secure processing area depends on whether the data packet is not corrupted and the signature is admissible. If it is found that a data packet is corrupted, the communications handling application 112 requests a re-transmit of the data package via the protocol link 114.

Furthermore, the communication handling application 112 sets a time limit in which a packet must arrive after a packet with a lower number has arrived. The time limit may specify, for example, that packet 106 has to arrive at most 500 ms after packet 105. The specified time limit may depend on the connection type. If the time limit has lapsed and the data packet has not arrived, the communication handling application 112 requests a re-transmit of the packet via the protocol link 114. Alternatively, the communication handling application 112 may divide the time in time slots, specify the data packets which are due in the next time slot and trigger a re-transmit of the data packets that have not arrived in this time slot. The communication handling application 112 may also confirm when a data packet is received or when it is forwarded to the secure processing area 111.

Moreover, the synchronization control process 117 on the ground as well as the communication handling application 112 at the aircraft may schedule the data packets according to urgency. The applications 112, 117 may request an urgent re-transmit via the satellite connection while a re-transmit with a low priority may be deferred until the aircraft is grounded.

The embodiments can also be described with the following lists of elements being organized into items. The respective combinations of features which are disclosed in the item list are regarded as independent subject matter, respectively, that can also be combined with other features of the application.
1. Aircraft computer system, the aircraft computer system comprising
   - an electronic flight bag computer,
   - at least two server computers which are linked via a databus in a network configuration, wherein the electronic flight bag computer and the at least two server computers are linked via respective control lines and wherein at least one of the server computers is configured to change between an electronic flight bag mode and an in-flight entertainment mode in response to receiving a pre-determined signal via the control line, wherein at least one of the server computers comprises
      - at least two network switches, and wherein the at least one server computer is configured to activate one of the at least two network switches and to deactivate the other one of the at least two network switches in response to the pre-determined signal via the control line.
2. Aircraft computer system according to item 1, wherein at least a first server computer and a second server computer of the server computers of the network configuration comprise
   - a first network switch and a second network switch, wherein
   - the first network switch of the first server computer is linked to the first network switch of the second server computer, and
   - the second network switch of the first computer is linked to the second network switch of the second server computer, and wherein, in an electronic flight bag mode, the first network switch of the first server computer is configured to communicate with the first network switch of the second computer, and wherein, in an in-flight entertainment mode, the second network switch of the first server computer is configured to communicate with the second network switch of the second computer.
3. Aircraft computer system according to item 2, wherein the respective other network switch is configured to be disabled.
4. Aircraft computer system according to one of the items 1 to 3, wherein the first network switch of a server computer is part of a network and control unit and wherein
   - a first control line and a second control line are connected to the network and control unit, wherein
   - the network and control unit is configured to receive pre-determined control commands from the electronic flight bag computer via the first control line and is configured to send pre-determined control commands to a further server computer of the network configuration via the second control line, and wherein
   - the further server computer is configured to change between an electronic flight bag mode and an inflight entertainment mode in response to a predetermined command via the second control line.
5. Aircraft computer system according to item 4, wherein the network and control unit is furthermore connected to at least one media server processor and wherein the media server processor is configured to change between an electronic flight bag mode and an in-flight entertainment mode in response to a pre-determined command signal from the network and control unit.
6. Aircraft computer system according to item 5, wherein the network and control unit is connected to a second network switch and wherein the second network switch is configured to change between an electronic flight bag mode and an in-flight entertainment mode in response to a command signal from the network and control unit.
7. Aircraft computer system according to item 6, wherein the second network switch is an Ethernet switch.
8. Aircraft computer system according to item 6 or item 7, wherein the first network switch is a four port switch.
9. Method to configure an aircraft computer system, the method comprising
   - generating a pre-determined control command with an electronic flight bag computer,
   - sending the pre-determined control command to a server computer of a network configuration of server computers,
   - changing between an electronic flight bag mode and an in-flight entertainment mode of the server computer, the changing of mode comprising:
      - enabling a first set of network connection lines of the server computer,
      - disabling a second set of network connection lines of the server computer.
10. Aircraft computer system, the aircraft computer system comprising
   - an electronic flight bag computer,
   - at least two server computers which are linked in a network configuration, wherein the electronic flight bag computer and the at least two server computers are linked via control lines and wherein at least one of the server computers is configured to change between an electronic flight bag mode and an in-flight entertainment mode in response to a pre-determined signal via the control line, wherein
      at least one of the server computers of the network configuration is configured to reboot in response to a pre-determined command from the electronic flight bag computer via a control line.
11. Aircraft computer system according to item 10, wherein at least one of the server computers of the network configuration is configured to load an executable image, in response to a command from the electronic flight bag computer via a control line.
12. Aircraft computer system according to item 11, wherein the executable image comprises an operating system.
13. Aircraft computer system according to item 12, wherein the server computer is configured to load an executable image with at least one electronic flight bag application in response to a command to change to an electronic flight bag mode and wherein the server computer is configured to load an executable image with at least one in-flight entertainment application in response to a command to change to an in-flight entertainment mode.
14. Method to configure an aircraft computer system, the method comprising
   - generating a pre-determined control command with an electronic flight bag computer,
   - sending the pre-determined control command from the electronic flight bag computer to a server computer of a network configuration of server computers via a control line,
   - changing between an electronic flight bag mode and an in-flight entertainment mode of the server computer in response to the pre-determined control command, the changing between the modes comprising:
      - rebooting of the server computer,
      - loading an executable image from an external computer readable memory into a computer readable memory of the server computer.
15. Server computer of an aircraft, which is configured to change between an electronic flight bag mode and an in-flight entertainment mode, the server computer comprising
   - a network and control unit with an IP-router,
   - a first network switch,
   - a second network switch,
      wherein the IP-router is configured to detect internal and external data packets based on identification data of the data packets and wherein the IP-router is configured to route the internal data packets via the first network switch and to route the external data packets via the second network switch.
16. Server computer according to item 15, wherein the first network switch is connected to a network switch of an electronic flight bag computer, wherein the electronic flight bag computer is connected to a transceiver to a worldwide satellite link and the server computer is connected to a transceiver of a broadband satellite link.
17. Server computer according to item 15 or item 16, wherein
   - the first network switch is connected to a first network switch of a second server computer of a network configuration,
   - the second network switch is connected to a second network switch of a second server computer of a network configuration and wherein
   - the IP-router is configured to forward the internal data packets via the first network switch and to forward the external data packets via the second network switch.
18. Method for transmitting data in an aircraft computer system comprising
   - receiving a data signal via an aircraft antenna,
   - transmitting the data signal to a server computer,
   - deriving data packets from the data signal,
   - using identifiers in the data packets to classify the data packets into internal and external data packets,
   - forwarding the internal data packets to an electronic flight bag computer via a first network switch of the server computer,
   - forwarding the external data packets to inflight entertainment servers via a second network switch of the server computer.
19. Wireless network in an aircraft, the wireless network comprising
   - a first WLAN communication equipment and
   - a second short range WLAN communication equipment and an aircraft computer which is configured to send and receive data over the short range WLAN communication equipment according to at least two pre-determined proprietary protocols which are based on a serial Bluetooth protocol and wherein an aircraft computer which is connected to the short range WLAN communication equipment is configured to change between the at least two proprietary protocols in a pre-determined way.
20. Wireless network in an aircraft according to item 19,
   wherein
   - a protocol indicator is included into data packets of the short range WLAN communication equipment,
   wherein
   - a list of pre-determined protocols and associated protocol identifiers is stored on a computer readable memory of an aircraft computer, wherein
   - the aircraft computer is configured to choose a pre-determined protocol based on the protocol identifier and to decode a data packet according to the pre-determined protocol.
21. Wireless network in an aircraft according to item 19 or item 20, wherein
   - a protocol sequence indicator is included into data packets of the short range WLAN communication equipment,
   - a list of pre-determined protocols and associated protocol identifiers is stored on a computer readable memory of an aircraft computer, wherein
   - the aircraft computer is configured to choose a pre-determined sequence of pre-determined protocols based on the protocol sequence identifier and to decode one or more data packets according to the pre-determined protocol sequence.
22. Wireless network according to one of the items 19 to 21, wherein the aircraft computer is connected to an aircraft antenna and wherein a computer readable memory of the aircraft computer comprises an application for forwarding data packets of the short range WLAN to a ground station via the aircraft antenna.
23. Wireless network according to one of the items 19 to 22, wherein the aircraft computer comprises a data assembler, the data assembler being configured to assemble different types of data that is contained in the data packets of the short range WLAN into a data bundle.
24. Wireless network according to one of the items 19 to 23, wherein the aircraft computer is furthermore configured to provide a sequence number to the data bundle.
25. Method for transmitting data over a wireless network of an aircraft comprising
   - generating data packets from data to be transmitted, wherein the data packets conform to a pre-determined protocol, the pre-determined protocol being based on a Bluetooth serial profile and wherein at least one of the data packets comprises a pre-determined protocol identifier,
   - generating a data signal from the data packets,
   - sending the data signal from a mobile device within an aircraft,
   - receiving the data signal by a WLAN access cluster, the WLAN access cluster being connected to a server computer in the aircraft,
   - deriving data packets from the data signal,
   - using the pre-determined protocol identifier to automatically select a pre-determined protocol that is based on the Bluetooth serial protocol and to decode the data packets according to the pre-determined protocol.
26. Method according to item 25, the generation of the data packets comprising
   - attributing a pre-determined significance to Bits of the data packets according to a pre-determined scheme, wherein the pre-determined scheme corresponds to the pre-determined protocol identifier.
27. Packet router for forwarding data packets to a secure processing area in a computer system on an aircraft wherein the packet router comprises
   - means for storing an aircraft related key,
   - means for decrypting data packets with the aircraft related key and
   - means for forwarding the data packets to the secure processing area of the aircraft if the data packets are detected as admissible, wherein the detection comprises a successful decryption attempt with the aircraft related key.
28. Packet router according to item 27, wherein the aircraft related key is derived from a tail number of the aircraft.
29. Packet router according to item 27, wherein the packet router further comprises a timer and a means for determining a list of packet numbers of data packets to be received in a time slot, depending on packet numbers of data packets received in a preceding time slot and means for triggering a re-transmission for data packets with numbers that are not in the determined list of packet numbers.
30. Packet router according to one of the items 27 to 29, wherein the packet router is located within an electronic flight bag line replaceable unit.
31. Packet router according to one of the items 27 to 29, wherein the packet router is located within an IP router.
32. Aircraft computer system with a packet router according to one of the items 27 to 31, the aircraft computer system comprising the secure processing area, wherein the secure processing area comprises an electronic flight bag line replaceable unit.

### Reference

- 10: Flight information system
- 11: aircraft
- 13: Bluetooth communication channel
- 14: first data network
- 27: satellite
- 31: satellite communication channel
- 32: satellite communication channel
- 33: service provider's data centre
- 34: operations support centre
- 35: airport
- 36: airport
- 37: airport communication channels
- 39: airline communication channels
- 40: airline office
- 41: second secure connection
- 42: second data network
- 50: computer configuration
- 51: EFB LRU
- 52: server computer
- 53: wireless access point cluster

- 54: wireless access point cluster
- 55: wireless access point cluster
- 56: pilot terminal unit
- 57: pilot terminal unit
- 59, 60, 61, 62, 63: Multi core microprocessors
- 64: IP router/network traffic router
- 65: multi-core microprocessor
- 66: Ethernet switch
- 67: internal traffic section
- 68: external traffic section
- 69: KU-band system
- 70: L-band system
- 71: onboard wireless communication unit
- 72, 73, 74: local wireless acess points
- 75, 76, 77: Connection cables
- 81: network and control unit
- 82: media server processor
- 83: media server processor
- 84: solid state drive
- 85: power supply
- 86: network link and aggregation unit
- 91: data line
- 92: control line
- 93: control line
- 94: internal data line
- 100: daisy chain configuration
- 101: aircraft data acquisition application
- 102: data synchronization application
- 103: secure connection

- 105, 106, 107, 108: data packets
- 111: secure processing area
- 112: communication handler application
- 113: signature checking application
- 114: protocol link
- 116: manual transmission channel
- 117: synchronization control process

## Claims

1. Aircraft computer system, the aircraft computer system comprising
- an electronic flight bag computer,
- at least two server computers which are linked via a databus in a network configuration, wherein the electronic flight bag computer and the at least two server computers are linked via respective control lines and wherein at least one of the server computers is configured to change between an electronic flight bag mode and an in-flight entertainment mode in response to receiving a pre-determined signal via the control line, wherein at least one of the server computers comprises
- at least two network switches, and wherein the at least one server computer is configured to activate one of the at least two network switches and to deactivate the other one of the at least two network switches in response to the pre-determined signal via the control line.

2. Aircraft computer system according to claim 1, wherein at least a first server computer and a second server computer of the server computers of the network configuration comprise
- a first network switch and a second network switch, wherein
- the first network switch of the first server computer is linked to the first network switch of the second server computer, and
- the second network switch of the first computer is linked to the second network switch of the second server computer, and wherein, in an electronic flight bag mode, the first network switch of the first server computer is configured to communicate with the first network switch of the second computer, and wherein, in an in-flight entertainment mode, the second network switch of the first server computer is configured to communicate with the second network switch of the second computer.

3. Aircraft computer system according to claim 2, wherein the respective other network switch is configured to be disabled.

4. Aircraft computer system according to one of the claims 1 to 3, wherein the first network switch of a server computer is part of a network and control unit and wherein
- a first control line and a second control line are connected to the network and control unit, wherein
- the network and control unit is configured to receive pre-determined control commands from the electronic flight bag computer via the first control line and is configured to send pre-determined control commands to a further server computer of the network configuration via the second control line, and wherein
- the further server computer is configured to change between an electronic flight bag mode and an inflight entertainment mode in response to a predetermined command via the second control line.

5. Aircraft computer system according to claim 4, wherein the network and control unit is furthermore connected to at least one media server processor and wherein the media server processor is configured to change between an electronic flight bag mode and an in-flight entertainment mode in response to a pre-determined command signal from the network and control unit.

6. Aircraft computer system according to claim 5, wherein the network and control unit is connected to a second network switch and wherein the second network switch is configured to change between an electronic flight bag mode and an in-flight entertainment mode in response to a command signal from the network and control unit.

7. Method to configure an aircraft computer system, the method comprising
- generating a pre-determined control command with an electronic flight bag computer,
- sending the pre-determined control command to a server computer of a network configuration of server computers,
- changing between an electronic flight bag mode and an in-flight entertainment mode of the server computer, the changing of mode comprising:
- enabling a first set of network connection lines of the server computer,
- disabling a second set of network connection lines of the server computer.

8. Aircraft computer system, the aircraft computer system comprising
- an electronic flight bag computer,
- at least two server computers which are linked in a network configuration, wherein the electronic flight bag computer and the at least two server computers are linked via control lines and wherein at least one of the server computers is configured to change between an electronic flight bag mode and an in-flight entertainment mode in response to a pre-determined signal via the control line, wherein
at least one of the server computers of the network configuration is configured to reboot in response to a pre-determined command from the electronic flight bag computer via a control line.

9. Aircraft computer system according to claim 8, wherein at least one of the server computers of the network configuration is configured to load an executable image, in response to a command from the electronic flight bag computer via a control line.

10. Aircraft computer system according to claim 9, wherein the executable image comprises an operating system.

11. Aircraft computer system according to claim 10, wherein the server computer is configured to load an executable image with at least one electronic flight bag application in response to a command to change to an electronic flight bag mode and wherein the server computer is configured to load an executable image with at least one in-flight entertainment application in response to a command to change to an in-flight entertainment mode.

12. Method to configure an aircraft computer system, the method comprising
- generating a pre-determined control command with an electronic flight bag computer,
- sending the pre-determined control command from the electronic flight bag computer to a server computer of a network configuration of server computers via a control line,
- changing between an electronic flight bag mode and an in-flight entertainment mode of the server computer in response to the pre-determined control command, the changing between the modes comprising:
- rebooting of the server computer,
- loading an executable image from an external computer readable memory into a computer readable memory of the server computer.

13. Server computer of an aircraft, which is configured to change between an electronic flight bag mode and an in-flight entertainment mode, the server computer comprising
- a network and control unit with an IP-router,
- a first network switch,
- a second network switch,
wherein the IP-router is configured to detect internal and external data packets based on identification data of the data packets and wherein the IP-router is configured to route the internal data packets via the first network switch and to route the external data packets via the second network switch.

14. Server computer according to claim 13, wherein the first network switch is connected to a network switch of an electronic flight bag computer, wherein the electronic flight bag computer is connected to a transceiver to a worldwide satellite link and the server computer is connected to a transceiver of a broadband satellite link.

15. Server computer according to claim 13 or 14, wherein
- the first network switch is connected to a first network switch of a second server computer of a network configuration,
- the second network switch is connected to a second network switch of a second server computer of a network configuration and wherein
- the IP-router is configured to forward the internal data packets via the first network switch and to forward the external data packets via the second network switch.
